# EUROPEAN PATENT APPLICATION

(11) **EP 4 783 315 A1**
(43) Date of publication of application: **29.07.2026**
(21) Application number: 24869790.6
(22) Date of filing: 28.05.2024
(51) Int. Cl.: H01M 50/172

(54) **BATTERY CELL, BATTERY, AND ELECTRICAL DEVICE**

(30) Priority: 28.09.2023 CN 202322664868 U
(71) Applicant: Contemporary Amperex Technology Co., Limited, Ningde, Fujian 352100 (CN)
(72) Inventor: KE, Haibo, Ningde, Fujian 352100 (CN); HUANG, Shoujun, Ningde, Fujian 352100 (CN); LI, Quankun, Ningde, Fujian 352100 (CN); YANG, Kaihuan, Ningde, Fujian 352100 (CN); CHEN, Xinxiang, Ningde, Fujian 352100 (CN); CHEN, Yanlin, Ningde, Fujian 352100 (CN)
(74) Representative: Ran, Handong
(86) International application number: PCT/CN2024/095846
(87) International publication number: WO 2025/066226

(57) **Abstract**

A battery cell (100), a battery (200), and an electrical device (1000). The battery cell (100) comprises an insulating film (10) and an electrode assembly (20). The insulating film (10) comprises a bottom wall (11), and a side wall (12) connected to the bottom wall (11), an accommodating space (13) being defined by the bottom wall (11) and the side wall (12), a gap (14) being formed between the side wall (12) and the bottom wall (11), and the gap (14) penetrating through the side wall (12) and being in communication with the accommodating space (13). The electrode assembly (20) is disposed in the accommodating space (13), and abuts against the bottom wall (11).

## Description

### PRIORITY INFORMATION

The present application claims priority and interest to Patent Application No. 202322664868.9 filed with the China National Intellectual Property Administration on September 28, 2023, which is incorporated herein by reference in its entirety.

### TECHNICAL FIELD

The present application relates to the field of battery technologies, and in particular, to a battery cell, a battery, and an electric device.

### BACKGROUND

In the related art, a battery cell generally includes an electrode assembly and an insulating film, and the insulating film wraps the electrode assembly to mitigate the risk of short circuit caused by contact between the electrode assembly and other components of the battery cell. Due to the electrode assembly being wrapped by the insulating film, an area of direct contact between the electrode assembly and an electrolyte is small, which affects the wetting effect of the electrode assembly. Therefore, how to improve the wetting effect of the electrode assembly has become a technical problem to be solved.

### SUMMARY

The present application provides a battery cell, a battery, and an electric device, which can solve the problem that the wetting effect of an electrode assembly is poor after the electrode assembly is wrapped by the insulating film.

The battery cell of an embodiment of the present application includes an insulating film and an electrode assembly. The insulating film includes a bottom wall and a side wall connected to the bottom wall, the bottom wall and the side wall enclose an accommodation space, a gap is formed between the side wall and the bottom wall, and the gap runs through the side wall and is in communication with the accommodation space. The electrode assembly is disposed in the accommodation space and abuts against the bottom wall.

In the battery cell of an embodiment of the present application, the gap runs through the side wall and is connected to the accommodation space, which can promote an electrolyte to enter the accommodation space through the gap, thereby improving the wetting effect of the electrode assembly. In addition, the setting of the gap allows the electrode assembly to remain in communication with the outside of the accommodation space, so that when thermal runaway occurs in the electrode assembly, the gas in the accommodation space can flow smoothly, thereby reducing safety risks.

In some embodiments, the side wall includes a first wall and a second wall connected to the first wall, and the gap is formed between one of the first wall and the second wall and the bottom wall.

In this way, since the gap is formed between the first wall or the second wall and the bottom wall, the electrolyte may enter the accommodation space through the gap, thereby achieving a more uniform distribution around the electrode assembly, thereby improving the contact situation between the electrode assembly and the electrolyte, and further enhancing the wetting effect of the electrode assembly. In addition, this can also reduce the risk of fracture and detachment between the bottom wall and the side wall.

In some embodiments, an area of the first wall is greater than an area of the second wall, and the gap is formed between the second wall and the bottom wall.

In this way, the second wall is smaller relative to the first wall, so the electrolyte can more easily cover a region between the second wall and the bottom wall. This means that forming the gap between the second wall and the bottom wall can allow the electrolyte to more easily enter the accommodation space through the gap. In addition, this can also provide a larger connection size between the bottom wall and the side wall, reducing the risk of fracture and detachment between the bottom wall and the side wall.

In some embodiments, the gap extends along an edge of the first wall or the second wall to a corner between the first wall and the second wall, so as to separate the first wall from the bottom wall or to separate the second wall from the bottom wall.

In this way, by extending the gap to the corner between the first wall and the second wall, a relatively large gap is formed, which can improve the wetting effect of the electrode assembly.

In some embodiments, two first walls and two second walls are provided, the two first walls are oppositely disposed, the two second walls are oppositely disposed, the first wall and the second wall form multiple corners, and along a circumferential direction of the insulating film, the gap extends from one of the corners to an adjacent another corner.

In this way, the gap extends from one corner to an adjacent another corner along the circumferential direction of the insulating film, and the gap has a relatively large size, which creates a continuous channel, allowing the electrolyte to be uniformly distributed around the electrode assembly through the gap, thereby improving the wetting effect of the electrode assembly.

In some embodiments, the first wall is connected to the bottom wall, and the gap is formed between the second wall and the bottom wall.

In this way, the first wall is connected to the bottom wall, which can keep the bottom wall and the side wall in a connected state, so that the electrode assembly is wrapped by the insulating film in this region, ensuring the insulation performance of the insulating film here. A gap is formed between the second wall and the bottom wall, which allows the electrolyte to enter the accommodation space through the gap, thereby improving the wetting effect of the electrode assembly.

In some embodiments, two first walls are provided, the two first walls are oppositely disposed, the second wall includes two folding pieces, the two folding pieces are connected to the two first walls in a one-to-one correspondence, the two folding pieces are partially overlapped, and the gap is formed between the two folding pieces and the bottom wall.

In this way, designing the insulating film in the form of folding pieces can reduce the assembly difficulty, and the insulating film can quickly wrap around the circumferential direction of the electrode assembly during the assembly process, which can reduce the probability of defects such as burrs caused by scratching during the assembly process. In addition, the two folding pieces are partially overlapped, which can improve the insulation performance of the second wall and mitigate the risk of short circuit caused by contact between the electrode assembly and other components outside the second wall.

In some embodiments, the battery cell includes a connecting member, one end of the connecting member is connected to the two folding pieces, the other end is fixed to a side of the bottom wall away from the electrode assembly, and the connecting member covers part of the gap.

In this way, since one end of the connecting member is connected to the two folding pieces and the other end is fixed to one side of the bottom wall, the connecting member provides stable support and fixing points, thereby reducing the probability of uncontrolled warping deformation of the folding pieces during assembly or battery operation.

In some embodiments, an edge portion of the bottom wall protrudes from an outer surface of the second wall at the gap. In this way, by having the protruding design of the edge portion of the bottom wall, a safety distance is provided between the electrode assembly and other components of the battery cell, reducing the probability of contact between the electrode assembly and other components of the battery cell, thereby ensuring that the insulation function of the insulating film does not fail.

In some embodiments, a height of the gap is in a range from 0.05 mm to 10 mm. In this way, limiting the height of the gap to a range of 0.05 mm to 10 mm can ensure that the electrode assembly has a good wetting effect, and the gap has little impact on the insulation performance of the insulating film.

A battery of an embodiment of the present application includes the battery cell described in any one of the above embodiments. In this way, since in the battery cell, the electrode assembly can be effectively wetted, and the function of the insulating film is not greatly affected, the battery of an embodiment of the present application has good performance and can operate continuously and stably in a safe environment.

An electric device of an embodiment of the present application includes the battery cell described in any one of the above embodiments or the battery described in the above embodiment. In this way, since in the battery cell or battery, the electrode assembly can be effectively wetted, and the function of the insulating film is not greatly affected, the electric device of an embodiment of the present application has good performance and can operate continuously and stably in a safe environment.

Additional aspects and advantages of the present application will be given in part in the following description, part of which will become apparent from the following description or be learned from the practice of the embodiments of the present application.

### BRIEF DESCRIPTION OF DRAWINGS

The above and/or additional aspects and advantages of the present application will become obvious and easy to understand from the description of some embodiments with reference to the following accompanying drawings.
FIG. 1 is a schematic structural diagram of an electric device according to some embodiments of the present application;
FIG. 2 is a schematic structural diagram of a battery according to some embodiments of the present application;
FIG. 3 is a disassembled view of a battery cell according to some embodiments of the present application;
FIG. 4 is a schematic structural diagram of an insulating film according to some embodiments of the present application;
FIG. 5 is an enlarged view of part a of FIG. 4;
FIG. 6 is a schematic structural diagram of an insulating film according to some embodiments of the present application;
FIG. 7 is an enlarged view of part b of FIG. 6;
FIG. 8 is a schematic structural diagram of an insulating film in an unfolded state according to some embodiments of the present application; and
FIG. 9 is an enlarged view of part c of FIG. 8.

### Reference signs:

Battery cell 100; insulating film 10; bottom wall 11; side wall 12; accommodation space 13; gap 14; electrode assembly 20; first wall 120; second wall 121; corner 122; folding piece 1210; connecting member 30; battery 200; battery box 201; electric device 1000; controller 300; motor 400; housing 40; bottom plate 41; cover plate 42; and through hole 50.

### DETAILED DESCRIPTION OF EMBODIMENTS

The embodiments of the present application are described in detail below. Examples of the embodiments are shown in the accompanying drawings, and reference signs that are the same or similar always indicate the same or similar elements or elements with the same or similar functions. The embodiments described below with reference to the accompanying drawings are illustrative and merely for explaining the present application, and cannot be construed as any limitations on the present application.

In the description of the present application, it should be understood that the orientations or positional relationships indicated by the terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", and the like are based on the orientations or positional relationships shown in the accompanying drawings. These terms are merely for ease and brevity of description of the present application rather than indicating or implying that the apparatuses or elements mentioned must have specific orientations or must be constructed or manipulated according to specific orientations, and therefore shall not be construed as any limitations on the present application. In addition, the terms "first" and "second" are merely for the purpose of description, and shall not be understood as any indication or implication of relative importance or any implicit indication of the number of technical features indicated. Therefore, a feature limited by "first" or "second" can explicitly or implicitly include one or more such features. In the description of the present application, "multiple" means two or at least two unless otherwise specifically stated.

In the present application, unless otherwise specified and defined explicitly, the terms "mount", "connect", and "join" should be understood in their general senses. For example, they may refer to a fixed connection, a detachable connection, or an integral connection, may refer to a mechanical connection, an electrical connection, or can communicate with each other, and may refer to a direct connection, an indirect connection via an intermediate medium, an internal communication between two elements, or an interaction between two elements. Persons of ordinary skill in the art can understand specific meanings of these terms in the present application as appropriate to specific situations.

In the present application, unless otherwise specified and defined explicitly, a first feature being "above" or "below" a second feature may include that the first and second features are in direct contact, or the first and second features are not in direct contact but contact through another feature therebetween. Moreover, that the first feature is "above", "over", and "on" the second feature may include that the first feature is directly above and obliquely above the second feature or simply mean that the first feature is higher than the second feature in the horizontal direction. That the first feature is "under", "below", and "beneath" the second feature includes that the first feature is directly or obliquely below the second feature, or only means that the first feature is lower than the second feature in the horizontal direction.

The following disclosure provides many different embodiments or examples for implementing different structures of the present application. To simplify the disclosure of the present application, components and arrangements of specific examples are described below. Certainly, they are merely examples and are not intended to limit the present application. In addition, the present application may repeat reference numerals and/or reference letters in different examples, which repetition is for the purpose of simplicity and clarity, and does not itself indicate any relationship between the various embodiments and/or arrangements discussed. Furthermore, the present application provides examples of various specific processes and materials, but ordinary skill in the art can recognize the application of other processes and/or the use of other materials.

Currently, from the perspective of market development, application of batteries is becoming more and more extensive. Batteries have been widely used in energy storage power supply systems such as hydroelectric power plants, thermal power plants, wind power plants, and solar power plants, as well as many other fields including electric transportation tools such as electric bicycles, electric motorcycles, and electric vehicles, and aerospace. With continuous expansion of application fields of batteries, market demands for the batteries are also increasing.

In the process of manufacturing a battery, in order to reduce the probability of functional failure of a battery cell caused by contact between an electrode assembly and a housing, an insulating film is generally provided outside the electrode assembly, and the electrode assembly and the housing are isolated through the insulating film, thereby ensuring the normal operation of the electrode assembly.

However, the setting of the insulating film hinders the contact between the electrode assembly and the electrolyte, resulting in a poor wetting effect of the electrode assembly. In order to solve the problem of poor wetting effect of the electrode assembly, a gap is provided on the insulating film, so that the electrolyte can be in contact with the electrode assembly through the gap, thereby improving the wetting effect of the electrode assembly.

The electric device of an embodiment of the present application includes the battery cell or battery in any one of the following embodiments. In this way, the electric device of an embodiment of the present application. In this way, since in the battery cell or battery, the electrode assembly can be effectively wetted, and the function of the insulating film is not greatly affected, the electric device of an embodiment of the present application has good performance and can operate continuously and stably in a safe environment.

Specifically, the electric device can use a battery or battery cell as a power source. The electric device may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device 1000 of an embodiment of the present application being a vehicle is used as an example for description of the following embodiments.

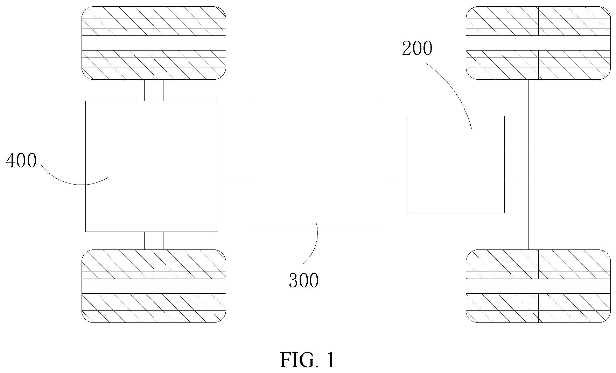

Referring to FIG. 1, FIG. 1 is a schematic structural diagram of an electric device 1000 according to some embodiments of the present application. The vehicle is provided with a battery 200 inside, where the battery 200 may be disposed at the bottom, front, or rear of the vehicle. The battery 200 may be configured to supply power to the vehicle. For example, the battery 200 may be used as an operational power source for the vehicle.

The vehicle may further include a controller 300 and a motor 400, where the controller 300 is configured to control the battery 200 to supply power to the motor 400, for example, to satisfy power needs of start, navigation, and driving of the vehicle.

In the embodiment of the present application, the battery 200 may be used as not only the operational power source for the vehicle, but also a driving power source for the vehicle, replacing or partially replacing fossil fuel or natural gas to provide driving traction for the vehicle.

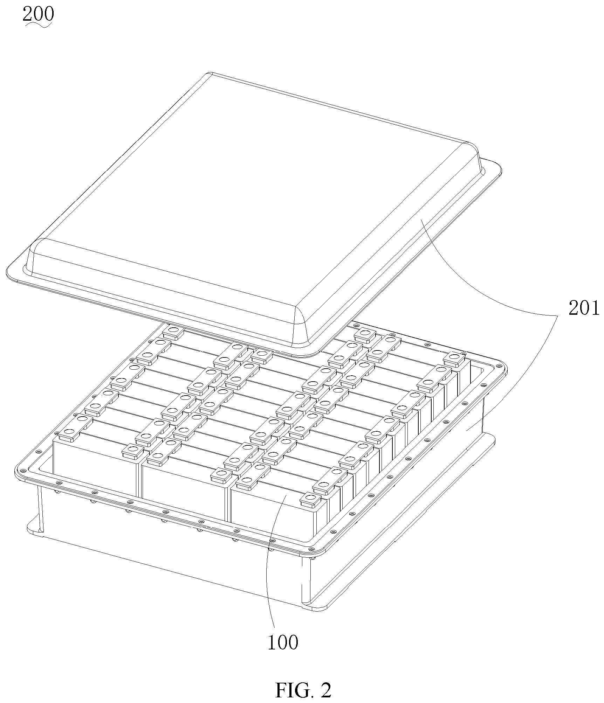

Referring to FIG. 2, FIG. 2 is a schematic structural diagram of a battery 200 according to some embodiments of the present application. The battery 200 of an embodiment of the present application includes the battery cell 100 of any one of the following embodiments. In this way, since in the battery cell 100, the electrode assembly 20 can be effectively wetted, and the function of the insulating film 10 is not greatly affected, the battery 200 of an embodiment of the present application has good performance and can operate continuously and stably in a safe environment.

In the embodiment of the present application, the battery cell 100 may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell 100 may be cylindrical, flat, cuboid, or of other shapes. This is not limited in the embodiments of the present application either. Battery cells 100 are categorized into three types depending on their packaging: cylindrical battery cell, prismatic battery cell, and pouch battery cell, which is not limited in the embodiments of the present application either.

The battery 200 generally includes a battery box 201 configured to enclose one or more battery cells 100. Multiple batteries may be accommodated in the battery box 201, and the battery box 201 can prevent liquids or other foreign matter from affecting charging or discharging of the battery cells 100. The battery box 201 serves as a carrier for the battery module and plays a key role in the safe operation and protection of the battery module. The battery box 201 needs to meet strength and stiffness requirements as well as the protection level requirements of the shell of electrical equipment, while providing collision protection. The shape of the battery box 201 may be a cuboid, a cube, or the like. The battery box 201 may be cast using materials such as steel plates, aluminum alloys, or the like. Alternatively, new lightweight materials may be used, such as glass fiber reinforced composite materials, carbon fiber reinforced composite materials, or the like.

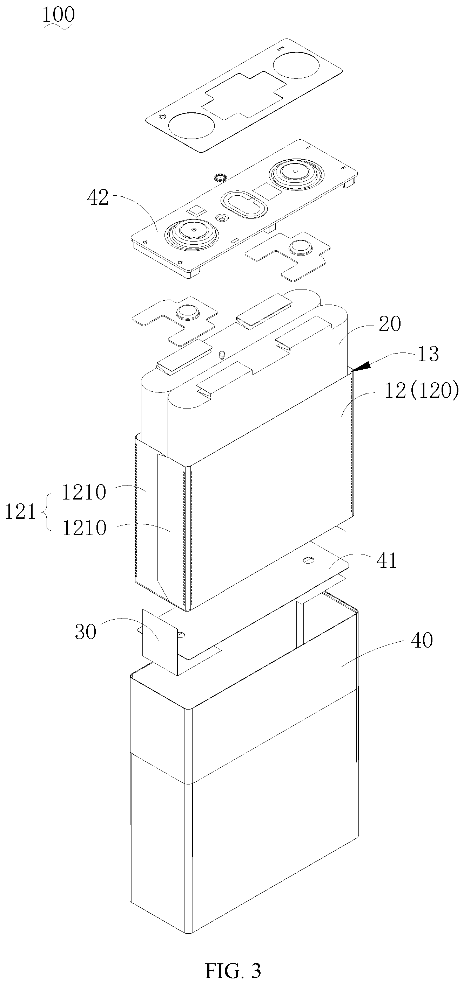

Referring to FIG. 3, FIG. 3 is a disassembled view of a battery cell 100 according to some embodiments of the present application. In some embodiments, the battery cell 100 includes a housing 40, and the insulating film 10 and the electrode assembly 20 are overall disposed in the housing 40. The housing 40 includes a bottom plate 41 and a cover plate 42 opposite to the bottom plate 41, and the bottom plate 41 and/or the cover plate 42 is provided with an explosion-proof valve. In some embodiments, the bottom plate 41 is provided with an explosion-proof valve. In some embodiments, the cover plate 42 is provided with an explosion-proof valve. The explosion-proof valve can play a protective role when thermal runaway occurs in the electrode assembly 20 inside the housing 40, releasing high-pressure gas generated when thermal runaway occurs in the electrode assembly 20 to the outside of the housing 40, so as to ensure the normal operation of the battery 200.

The electrode assembly 20 is a component in which an electrochemical reaction takes place in the battery cell 100. The housing 40 of the battery cell 100 may contain one or more electrode assemblies 20. The electrode assembly 20 is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a body portion of the electrode assembly 20, while parts of the positive electrode plate and the negative electrode plate that have no active substance separately constitute a tab. A positive electrode tab and the negative electrode tab may both be located at one end of the body portion or be located at both ends of the body portion respectively. During charging and discharging of the battery 200, a positive electrode active substance and a negative electrode active substance react with an electrolyte, and the tabs are connected to electrode terminals to form a current loop.

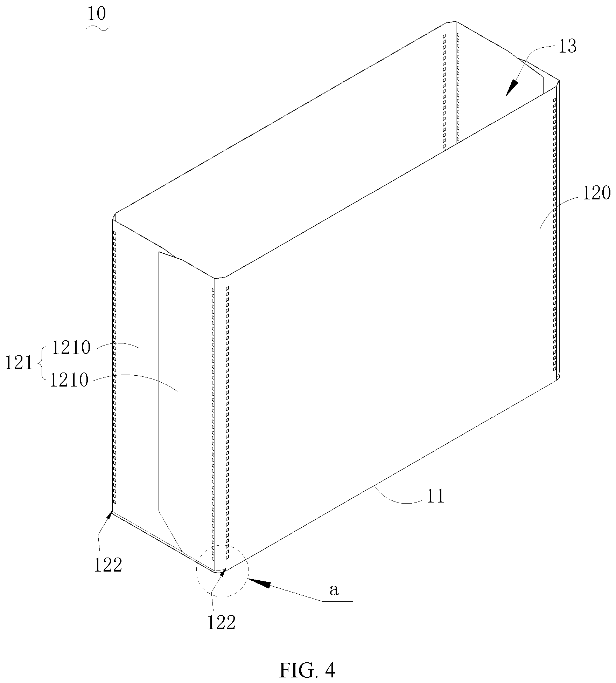

Referring to FIG. 3 and FIG. 4, FIG. 4 is a schematic structural diagram of an insulating film 10 according to some embodiments of the present application. The battery cell 100 of an embodiment of the present application includes an insulating film 10 and an electrode assembly 20. The insulating film 10 includes a bottom wall 11 and a side wall 12 connected to the bottom wall 11, the bottom wall 11 and the side wall 12 enclose an accommodation space 13, a gap 14 is formed between the side wall 12 and the bottom wall 11, and the gap 14 runs through the side wall 12 and is in communication with the accommodation space 13. The electrode assembly 20 is disposed in the accommodation space 13 and abuts against the bottom wall 11.

Specifically, the insulating film 10 is generally made of a non-conductive material, such as plastic or ceramic. The insulating film 10 may be a mylar (mylar) film, and the mylar film is a tough polyester polymer film. The bottom wall 11 is the bottom of the insulating film 10, usually a planar surface. The bottom wall 11 is a main portion of the insulating film 10 and is used as a bottom boundary of the insulating film 10. The side wall 12 and the bottom wall 11 may be integrally connected or separately connected. The side wall 12 may be connected to an edge of the bottom wall 11 to enclose the accommodation space 13 with the bottom wall 11. The accommodation space 13 is a region inside the insulating film 10 for accommodating the electrode assembly 20 and the electrolyte, and the like.

The gap 14 is a notch region between the side wall 12 and the bottom wall 11, and the gap 14 may be formed in a junction region between the side wall 12 and the bottom wall 11. The electrolyte may enter the accommodation space 13 through the gap 14. The gap 14 has a certain shape and size, and one or more gaps 14 may be provided.

The electrode assembly 20 may be placed in the accommodation space 13, and the electrode assembly 20 may be in close contact or attached to the bottom wall 11. The electrode assembly 20 and the electrolyte may undergo electrochemical reactions, the electrode assembly 20 is disposed in the accommodation space 13, and the electrode assembly 20 can be isolated from the housing 40 of the battery cell 100 using the insulating film 10. At this time, the electrolyte may be still in contact with the electrode assembly 20 through the gap 14, maintaining the wetting effect of the electrode assembly 20.

In the battery cell 100 of an embodiment of the present application, the gap 14 runs through the side wall 12 and is connected to the accommodation space 13, which can promote the electrolyte to enter the accommodation space 13 through the gap 14, thereby improving the wetting effect of the electrode assembly 20. In addition, the setting of the gap 14 allows the electrode assembly 20 to remain in communication with the outside of the accommodation space 13, so that when thermal runaway occurs in the electrode assembly 20, the gas in the accommodation space 13 can flow smoothly, thereby reducing safety risks.

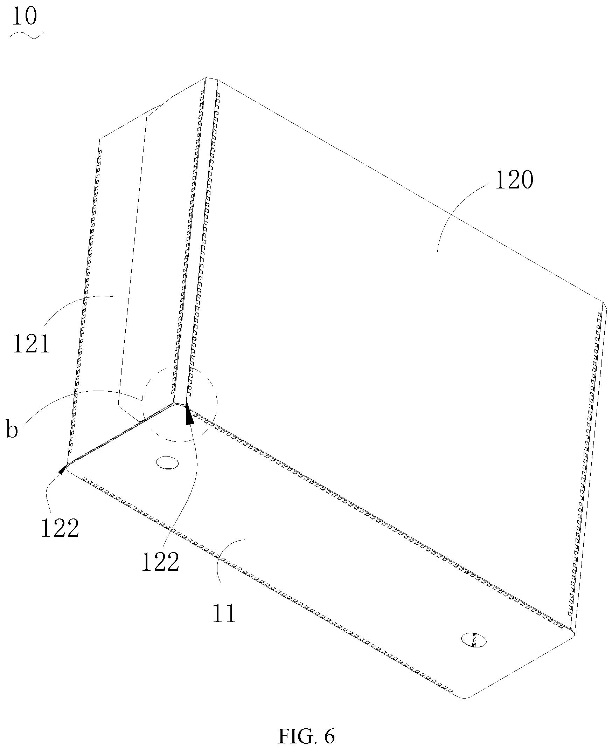

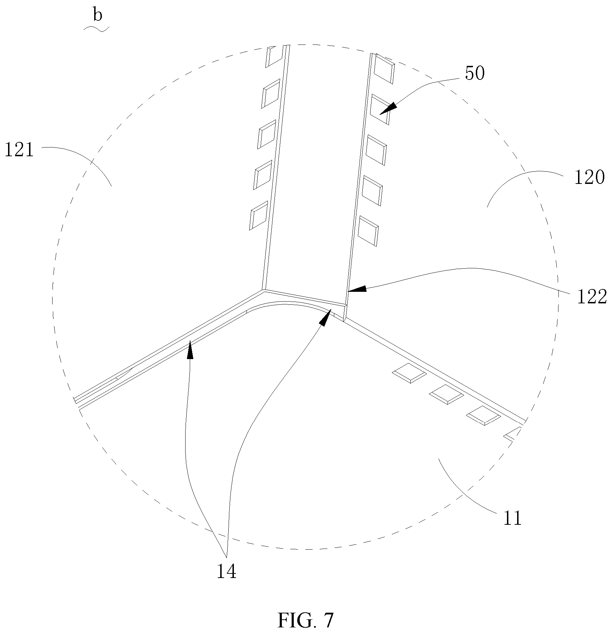

Referring to FIG. 4, FIG. 5, FIG. 6, and FIG. 7, FIG. 5 is an enlarged view of part a of FIG. 4, FIG. 6 is a schematic structural diagram of an insulating film 10 according to some embodiments of the present application, and FIG. 7 is an enlarged view of part b of FIG. 6. In some embodiments, the side wall 12 includes a first wall 120 and a second wall 121 connected to the first wall 120, and the gap 14 is formed between one of the first wall 120 and the second wall 121 and the bottom wall 11.

Specifically, the first wall 120 and the second wall 121 may be integrally connected or separately connected. An angle may be provided between the first wall 120 and the second wall 121, and the first wall 120 and the second wall 121 may be respectively connected to the bottom wall 11. A plurality of first walls 120 and the second walls 121 may be provided, such as two, three, four, or even more. In some embodiments, the gap 14 is formed between the first wall 120 and the bottom wall 11. In some embodiments, the gap 14 is formed between the second wall 121 and the bottom wall 11.

In this way, since the gap 14 is formed between the first wall 120 or the second wall 121 and the bottom wall 11, the electrolyte may enter the accommodation space 13 through the gap 14, thereby achieving a more uniform distribution around the electrode assembly 20, thereby improving the contact situation between the electrode assembly 20 and the electrolyte, and further enhancing the wetting effect of the electrode assembly 20. In addition, this can also reduce the risk of fracture and detachment between the bottom wall 11 and the side wall 12.

Referring to FIG. 3, in some embodiments, an area of the first wall 120 is greater than an area of the second wall 121, and the gap 14 is formed between the second wall 121 and the bottom wall 11.

Specifically, the area of the first wall 120 refers to the area of the largest surface on the first wall 120, and the area of the second wall 121 refers to the area of the largest surface on the second wall 121.

In this way, the second wall 121 is smaller relative to the first wall 120, so the electrolyte can more easily cover a region between the second wall 121 and the bottom wall 11. This means that forming the gap 14 between the second wall 121 and the bottom wall 11 can allow the electrolyte to more easily enter the accommodation space 13 through the gap 14. In addition, this can also provide a larger connection size between the bottom wall 11 and the side wall 12, reducing the risk of fracture and detachment between the bottom wall 11 and the side wall 12.

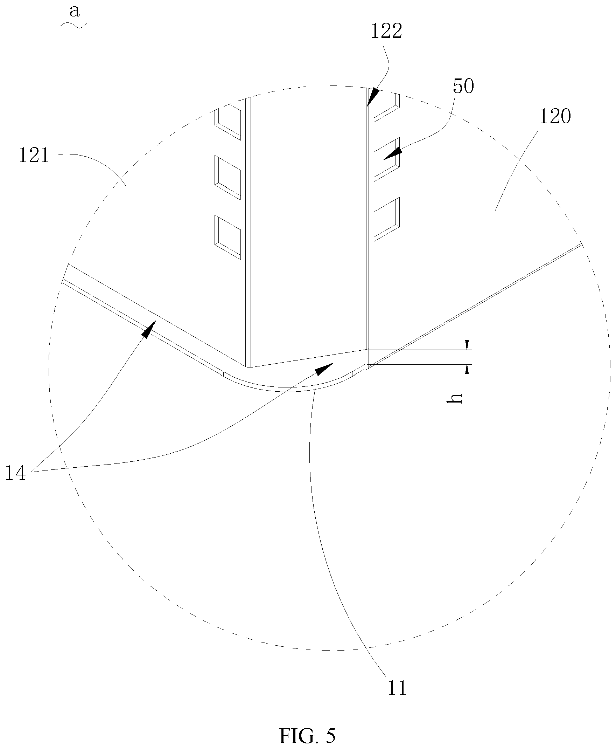

Referring to FIG. 5 and FIG. 7, in some embodiments, the gap 14 extends along an edge of the first wall 120 or the second wall 121 to a corner 122 between the first wall 120 and the second wall 121, so as to separate the first wall 120 from the bottom wall 11 or to separate the second wall 121 from the bottom wall 11.

Specifically, the "edge of the first wall 120 or the second wall 121" refers to an edge of the first wall 120 or the second wall 121 close to the bottom wall 11, and the corner 122 between the first wall 120 and the second wall 121 refers to a connection region between the first wall 120 and the second wall 121, and further refers to the corner of the connection region. The gap 14 may separate the first wall 120 from the bottom wall 11, or separate the second wall 121 from the bottom wall 11.

In this way, by extending the gap 14 to the corner 122 between the first wall 120 and the second wall 121, a relatively large gap 14 is formed, which can improve the wetting effect of the electrode assembly 20.

Referring to FIG. 4 and FIG. 6, in some embodiments, two first walls 120 and two second walls 121 are provided, the two first walls 120 are oppositely disposed, the two second walls 121 are oppositely disposed, the first wall 120 and the second wall 121 form multiple corners 122, and along a circumferential direction of the insulating film 10, the gap 14 extends from one of the corners 122 to an adjacent another corner 122.

Specifically, the two first walls 120 and the two second walls 121 may form a prismatic body together with the bottom wall 11, and in the prismatic body, the first wall 120 and the second wall 121 may form two, three, four, or even more corners 122. Along the circumferential direction of the insulating film 10, the gap 14 may extend along the bottom edge region of the prismatic body, from one corner to another corner.

In this way, the gap 14 extends from one corner 122 to an adjacent another corner 122 along the circumferential direction of the insulating film 10, and the gap 14 has a relatively large size, which creates a continuous channel, allowing the electrolyte to be uniformly distributed around the electrode assembly 20 through the gap 14, thereby improving the wetting effect of the electrode assembly 20.

Referring to FIG. 5 and FIG. 7, in some embodiments, the first wall 120 is connected to the bottom wall 11, and the gap 14 is formed between the second wall 121 and the bottom wall 11.

Specifically, the first wall 120 may be integrally connected to the bottom wall 11 or separately connected. A certain distance may be provided between the region of the second wall 121 close to the bottom wall 11 and the bottom wall 11, thereby forming a gap 14 having a certain shape structure.

Certainly, the gap 14 may also be formed between the second wall 121 and the bottom wall 11 by removing part of the material.

In this way, the first wall 120 is connected to the bottom wall 11, which can keep the bottom wall 11 and the side wall 12 in a connected state, so that the electrode assembly 20 is wrapped by the insulating film 10 in this region, ensuring the insulation performance of the insulating film 10 here. A gap 14 is formed between the second wall 121 and the bottom wall 11, which allows the electrolyte to enter the accommodation space 13 through the gap 14, thereby improving the wetting effect of the electrode assembly 20.

Referring to FIG. 4, FIG. 5, FIG. 6, and FIG. 7, in some embodiments, two first walls 120 are provided, the two first walls 120 are oppositely disposed, the second wall 121 includes two folding pieces 1210, the two folding pieces 1210 are connected to the two first walls 120 in a one-to-one correspondence, the two folding pieces 1210 are partially overlapped, and the gap 14 is formed between the two folding pieces 1210 and the bottom wall 11.

Specifically, the insulating film 10 may cover the electrode assembly 20 by folding, with the bottom wall 11 of the insulating film 10 as a supporting surface, folding along the connection between the first wall 120 and the second wall 121 and the bottom wall 11, so as to cover the electrode assembly 20 in the insulating film 10. The two folding pieces 1210 may be respectively connected to the edges of the two first walls 120, the first wall 120 is used as the first folding surface, and the second wall 121 is used as the second folding surface. After the first wall 120 is folded, the two folding pieces 1210 are folded in a direction toward each other, and after folding, the two folding pieces 1210 are partially overlapped, at which time a gap 14 may be formed between the folding piece 1210 and the bottom wall 11.

In this way, designing the insulating film 10 in the form of folding pieces 1210 can reduce the assembly difficulty, and the insulating film 10 can quickly wrap around the circumferential direction of the electrode assembly 20 during the assembly process, which can reduce the probability of defects such as burrs caused by scratching during the assembly process. Under this assembly method, the insulating film 10 can cover multiple electrode assemblies 20.

In addition, the two folding pieces 1210 are partially overlapped, which can improve the insulation performance of the second wall 121 and mitigate the risk of short circuit caused by contact between the electrode assembly 20 and other components outside the second wall 121.

Referring to FIG. 3, in some embodiments, the battery cell 100 includes a connecting member 30, one end of the connecting member 30 is connected to the two folding pieces 1210, the other end is fixed to a side of the bottom wall 11 away from the electrode assembly 20, and the connecting member 30 covers part of the gap 14.

Specifically, the connecting member 30 may be insulating tape, glue, or the like. One end of the connecting member 30 may be connected to the overlapping region of the two folding pieces 1210 to connect the two folding pieces 1210 at the same time, and the other end of the connecting member 30 may be fixed to a side of the bottom wall 11 away from the electrode assembly 20, thereby maintaining the stability of the connection. When the connecting member 30 connects the folding piece 1210 and the bottom wall 11, part of the gap 14 is covered, which reduces the probability of contact between the electrode assembly 20 and other components (for example, the housing 40) of the battery cell 100, thereby improving safety.

In this way, since one end of the connecting member 30 is connected to the two folding pieces 1210 and the other end is fixed to one side of the bottom wall 11, the connecting member 30 provides stable support and fixing points, thereby reducing the probability of uncontrolled warping deformation of the folding pieces 1210 during assembly or operation of the battery 200.

Referring to FIG. 5, in some embodiments, an edge portion of the bottom wall 11 protrudes from an outer surface of the second wall 121 at the gap 14.

Specifically, using the second wall 121 relative to the bottom wall 11 as a folding structure as an example, during the folding process of the second wall 121, a certain distance is provided between the second wall 121 and the bottom wall 11, and extended toward the center direction of the bottom wall 11.

In this way, by having the protruding design of the edge portion of the bottom wall 11, a safety distance is provided between the electrode assembly 20 and other components of the battery cell 100, reducing the probability of contact between the electrode assembly 20 and other components of the battery cell 100, thereby ensuring that the insulation function of the insulating film 10 does not fail.

Referring to FIG. 5 and FIG. 7, in some embodiments, the bottom wall 11 and/or the side wall 12 is provided with a burst line. The burst line may run through the bottom wall 11 and/or the side wall 12, or may not run through the bottom wall 11 and/or the side wall 12. The setting of the burst line may improve the wetting effect of the electrode assembly 20. For example, the electrolyte may be in contact with the electrode assembly 20 through the burst line running through the side wall 12. For another example, the electrolyte may be accommodated in the burst line that does not run through the side wall 12, and at this time, the burst line may increase the flow direction of the electrolyte, thereby improving the wetting effect of the electrode assembly 20.

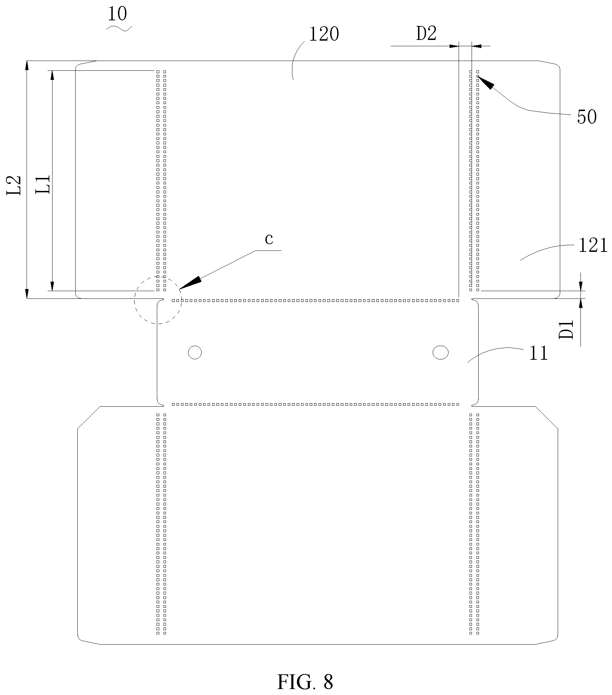

Referring to FIG. 5 and FIG. 8, FIG. 8 is a schematic structural diagram of an insulating film 10 in an unfolded state according to some embodiments of the present application. In some embodiments, the burst line is a through hole 50, and the through hole 50 is disposed close to a bending position of the insulating film 10. The setting of the through hole 50 may allow the electrolyte to pass through, thereby improving the wetting effect of the electrode assembly 20. The setting of the through hole 50 may also reduce the structural strength at the bending position of the insulating film 10, facilitating the bending of the insulating film 10.

Referring to FIG. 5 and FIG. 8, in some embodiments, a plurality of through holes 50 are arranged along an extending direction of the bending position. Two, three, four, or even more through holes 50 may be provided. The plurality of through holes 50 may be arranged in an array along the extending direction of the bending position. The plurality of through holes 50 may increase the flow rate of the electrolyte flowing into the accommodation space 13, thereby improving the wetting effect of the electrode assembly 20.

Referring to FIG. 8, in some embodiments, a length range of the through hole 50 is 0.2 mm to 2 mm, a width range of the through hole 50 is 0.1 mm to 1 mm, the shape of the through hole 50 may be square, ellipse, or the like, and the spacing between two adjacent through holes 50 may be 0.5 mm to 3 mm.

Referring to FIG. 8, in some embodiments, the ratio of a length L1 occupied by an arrangement region of the plurality of through holes 50 to a length L2 of the bending position is in a range from 50% to 99%. Within this range, sufficient through holes 50 are provided, resulting in a relatively large flow rate of the electrolyte flowing into the accommodation space 13, thereby achieving good wetting effect of the electrode assembly 20. In addition, within this range, the structural strength at the bending position is low, which is easy to bend. In one embodiment, a distance D1 from the bottom wall 11 to the through hole 50 on the first wall 120 and/or the second wall 121 may be 2 mm to 15 mm, and further, the distance D1 may be 2 mm to 10 mm.

Referring to FIG. 8, in one embodiment, a distance D2 from the connection between the first wall 120 and the second wall 121 to the through hole 50 on the bottom surface is 2 mm to 15 mm, and further, the distance D2 may be 2 mm to 10 mm. Within this range, the structural strength at the bending position is low, which is easy to bend.

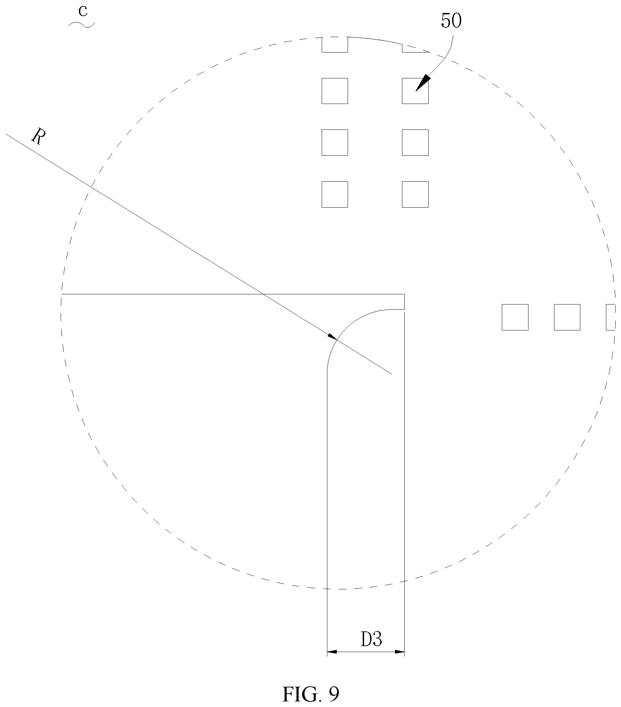

Referring to FIG. 9, FIG. 9 is an enlarged view of part c of FIG. 8. In some embodiments, a distance D3 from the gap 14 to the edge of the bottom wall 11 is 1 mm to 10 mm, and further, the distance D3 is 1 mm to 5 mm. Within this range, a relatively large flow rate of the electrolyte entering the accommodation space 13 through the gap 14 is achieved, resulting in good wetting effect of the electrode assembly 20. In addition, the gap 14 has little impact on the insulation performance of the insulating film 10.

Referring to FIG. 5 and FIG. 8. In some embodiments, a chamfer or a rounded corner is formed at the corner of the bottom wall 11. The chamfer and rounded corner facilitate folding and can reduce interference between the corner of the bottom wall 11 and other parts during the assembly process.

Referring to FIG. 9, in some embodiments, the range of a rounded corner R may be 1 mm to 10 mm, and further, the range may be 1 mm to 5 mm. Within this range, a relatively large flow rate of the electrolyte flowing into the accommodation space 13 through the gap 14 is achieved, resulting in good wetting effect of the electrode assembly 20. In addition, the gap 14 has little impact on the insulation performance of the insulating film 10.

Referring to FIG. 8, in some embodiments, a plurality of through holes 50 are symmetrically arranged on two sides of the length center of the bending position. Such arrangement can ensure the structural strength at each part of the bending position and avoid defects such as breakage during bending.

Referring to FIG. 5, in some embodiments, a height h of the gap 14 is in a range from 0.05 mm to 10 mm. For example, the height h of the gap 14 may be ranged from 0.05 mm to 9 mm, 0.1 mm to 9 mm, 0.2 mm to 8 mm, 0.5 mm to 5 mm, 5 mm to 10 mm, or the like. The height h of the gap 14 may be 0.05 mm, 0.1 mm, 0.2 mm, 5 mm, 10 mm, or the like.

Specifically, the height h of the gap 14 refers to a distance from the surface of the bottom wall 11 facing the first wall 120 or the second wall 121 to the first wall 120 or the second wall 121.

In this way, limiting the height h of the gap 14 to a range of 0.05 mm to 10 mm can ensure that the electrode assembly 20 has a good wetting effect, and the gap 14 has little impact on the insulation performance of the insulating film 10.

Referring to FIG. 3, FIG. 6, and FIG. 7, in a specific embodiment, the insulating film 10 covers the electrode assembly 20, the first wall 120 and the second wall 121 form multiple corners 122, along the circumferential direction of the insulating film 10, the gap 14 extends from one of the corners 122 to an adjacent another corner 122, and the electrolyte enters the accommodation space 13 through the gap 14, thereby improving the wetting effect of the electrode assembly 20.

In the description of this specification, reference to the description of the terms "an embodiment", "some embodiments", "an example of the embodiment", "an example", "a specific example", or "some examples" means that particular features, structures, materials or characteristics described in connection with the embodiments or examples are included in at least one embodiment or example of the present application. In this specification, descriptions of examples of the above terms do not necessarily refer to the same embodiment or example. Moreover, the specific features, structures, materials, or characteristics described may be combined in a suitable manner in any one or more embodiments or examples.

Although the embodiments of the present application have been shown and described, persons of ordinary skill in the art can understand that various changes, modifications, substitutions, and variants of these embodiments may be made without departing from the principle and essence of the present application, and the scope of the present application is limited by the claims and its equivalents.

## Claims

1. A battery cell, comprising:
an insulating film, wherein the insulating film comprises a bottom wall and a side wall connected to the bottom wall, wherein the bottom wall and the side wall enclose an accommodation space, and a gap is formed between the side wall and the bottom wall, wherein the gap runs through the side wall and is in communication with the accommodation space; and
an electrode assembly, wherein the electrode assembly is disposed in the accommodation space and abuts against the bottom wall.

2. The battery cell according to claim 1, wherein the side wall comprises a first wall and a second wall connected to the first wall, and the gap is formed between one of the first wall and the second wall and the bottom wall.

3. The battery cell according to claim 2, wherein an area of the first wall is greater than an area of the second wall, and the gap is formed between the second wall and the bottom wall.

4. The battery cell according to claim 2 or 3, wherein the gap extends along an edge of the first wall or the second wall to a corner between the first wall and the second wall, so as to separate the first wall from the bottom wall or to separate the second wall from the bottom wall.

5. The battery cell according to claim 4, wherein two first walls and two second walls are provided, wherein:
the two first walls are oppositely disposed, and the two second walls are oppositely disposed; and
the first walls and the second walls form multiple corners, and along a circumferential direction of the insulating film, the gap extends from one of the corners to an adjacent another corner.

6. The battery cell according to any one of claims 2 to 5, wherein the first wall is connected to the bottom wall, and the gap is formed between the second wall and the bottom wall.

7. The battery cell according to claim 6, wherein:
two first walls are provided, wherein the two first walls are oppositely disposed; and
the second wall comprises two folding pieces,
wherein the two folding pieces are connected to the two first walls in a one-to-one correspondence, the two folding pieces are partially overlapped, and the gap is formed between the two folding pieces and the bottom wall.

8. The battery cell according to claim 7, further comprising a connecting member, wherein one end of the connecting member is connected to the two folding pieces, the other end is fixed to a side of the bottom wall away from the electrode assembly, and the connecting member covers part of the gap.

9. The battery cell according to any one of claims 6 to 8, wherein an edge portion of the bottom wall protrudes from an outer surface of the second wall at the gap.

10. The battery cell according to any one of claims 1 to 9, wherein a height of the gap is in a range from 0.05 mm to 10 mm.

11. A battery, comprising the battery cell according to any one of claims 1 to 10.

12. An electric device, comprising the battery cell according to any one of claims 1 to 10 or the battery according to claim 11.
